# EUROPEAN PATENT SPECIFICATION

(11) **EP 4 661 119 B1**
(45) Date of publication and mention of the grant of the patent: **22.04.2026**
(21) Application number: 24180502.7
(22) Date of filing: 06.06.2024
(51) Int. Cl.: H01M 8/1018, C25B 1/02, C25B 9/70, C25B 11/00, C25B 11/052, H01M 8/2465, H01M 8/248, H01M 8/249, H01M 10/04, B23K 20/02, B23K 20/16, B32B 37/10, C04B 37/02, C25B 11/02, C04B 37/00, B23K 103/14, B23K 20/24, H01M 8/10

(54) **A METHOD OF PRODUCTION OF LAYERED COMPOSITE MATERIAL PACKS FOR USE AS AN ELECTRODE BY A MATERIAL BONDING PROCESS**
VERFAHREN ZUR HERSTELLUNG VON GESCHICHTETEN VERBUNDWERKSTOFFPACKUNGEN ZUR VERWENDUNG ALS ELEKTRODE DURCH EIN MATERIALVERBINDUNGSVERFAHREN
PROCÉDÉ DE PRODUCTION DE PAQUETS DE MATÉRIAU COMPOSITE STRATIFIÉ DESTINÉS À ÊTRE UTILISÉS COMME ÉLECTRODE PAR UN PROCESSUS DE LIAISON DE MATÉRIAU

(43) Date of publication of application: 10.12.2025
(73) Proprietor: Element 22 GmbH, 24148 Kiel (DE)
(72) Inventor: Winkelmueller, Wendelin Wolfhardt, 24106 Kiel (DE); Scharvogel, Matthias Bert, 20253 Hamburg (DE)
(74) Representative: Raffay & Fleck

(56) References cited:
- EP-A1- 0 280 112
- US-A- 4 252 263
- US-A1- 2012 082 920
- US-A1- 2015 083 369

## Description

The present invention refers to the production of layered composite material packs for use as electrodes.

Electrolysers and fuel cells are vital components of the clean energy transition, enabling the efficient conversion of renewable energy sources into hydrogen, a versatile and sustainable energy carrier.

Electrode packs in electrolysers and fuel cells play a fundamental role in facilitating electrochemical reactions that convert electrical energy into chemical energy (in the case of electrolysers) or vice versa (in the case of fuel cells). Electrode packs are composed of anode and cathode pairs, often with catalyst layers arranged therebetween, and they serve specific functions in each device.

### Electrode Packs in Electrolysers:

In electrode packs used in electrolysers the anode is the electrode where oxida-tion occurs during the electrolysis process. In an electrolyser, water is typically split into hydrogen ions (protons) and oxygen gas.

The cathode in electrode packs used in electrolysers is the electrode where reduction occurs during electrolysis. In an electrolyser, protons generated at the anode combine with electrons from the external circuit and reduce to form hydrogen gas.

Catalyst layers, often containing materials like platinum or other noble metals, are regularly applied to both, the anode and cathode of electrode packs for use in electrolysers. These catalysts facilitate the electrochemical reactions, reducing the energy required for the reactions to proceed.

In many electrolysers, a so-called Proton Exchange Membrane (PEM) separates the anode and cathode compartments. The PEM selectively allows protons to pass through while blocking electrons and gases, ensuring the separation of the anodic and cathodic reactions.

### Electrode Packs in Fuel Cells:

In a fuel cell, the anode is where hydrogen gas is oxidized to produce protons and electrons. Also, in fuel cells PEMs are regularly arranged. The overall reaction at the anode is the reverse of the hydrogen evolution reaction:
At the cathode, oxygen gas reacts with electrons and protons that migrate through the PEM to form water.

Similar to electrolysers, fuel cells usually have catalyst layers arranged on both, the anode and cathode. These catalysts facilitate the electrochemical reactions, allowing them to proceed at lower activation energies.

In PEM fuel cells, a thin membrane selectively conducts protons. The PEM separates the anode and cathode compartments, preventing direct mixing of hydrogen and oxygen gases while allowing the passage of protons.

The common functions of electrode packs in both applications, electrolyser and fuel cell, are:
Electron Flow: The flow of electrons generated at the anode to the cathode through an external circuit is what constitutes the electrical current.
Ion Transport: Proton exchange through the PEM or other electrolyte materials is crucial for completing the electrochemical circuit and maintaining charge neutrality.
Water Management: Both, electrolysers and fuel cells, must manage water flow during the reactions. Excessive water can lead to flooding, while too little can result in drying. Electrode packs often include features to regulate water levels.
Gas Management: Both, electrolysers and fuel cells, must manage gas flow during the reactions. Proper gas management is crucial to control, distribute and remove gases such as hydrogen, oxygen, and other by-products.
Heat Dissipation: Efficient heat dissipation is crucial to maintain optimal operating temperatures for the electrochemical reactions. Many electrode packs incorporate cooling systems to manage temperature.

The design of electrode packs significantly influences the efficiency, durability, and overall performance of fuel cells and electrolysers.

Titanium plays an important role as an electrode material in the field of electrolysers and fuel cells due to its special properties, offering numerous advantages over conventional materials. The most important advantages of using titanium as an electrode material in electrolysers and fuel cells are:
Corrosion Resistance: Titanium's inherent ability to form a stable oxide layer provides very good corrosion resistance. This oxide layer, also known as the passivation layer, protects the titanium electrode from chemical attack by aggressive electrolytes, such as acidic solutions. As a result, the titanium electrode remains durable and maintains its performance over extended operational periods.
Lightweight Design: Titanium possesses a relatively low density compared to other metals, contributing to the overall lightweight design of the electrode pack. This characteristic is especially advantageous in portable and mobile electrolyser and fuel cell applications, where weight reduction is critical for increased mobility and efficiency.
Facilitation of High Current Densities: The use of titanium as an electrode material allows for the design of efficient and compact electrode structures. Titanium-based electrodes offer excellent electrical conductivity, facilitating the passage of high current densities during operation that is equipped with such electrodes. This, in turn, enhances the overall efficiency of the electrolyzer or fuel cell.
Flexibility and Customizability: Titanium can be easily fabricated into various shapes and sizes, making it highly customizable for specific electrolyzer and fuel cell designs. This flexibility allows manufacturers to tailor the electrode pack to meet the requirements of different applications, optimizing system performance and integration.
Cost-effectiveness: Advancements in titanium extraction and processing technologies have contributed to its increased availability and reduced cost. As a result, titanium has become a more cost-effective choice compared to other materials like platinum, while still providing excellent performance and durability.
High Electrochemical Stability: Titanium exhibits high electrochemical stability, even under challenging operating conditions. It can withstand the aggressive chemical environment and maintain its structural integrity, ensuring reliable and consistent performance during operation when used as electrode material in electrolysers or fuel cells.

Whilst titanium being well suited for the application, it is a common procedure to coat surfaces or interfaces of titanium-built layers with other materials to even enhance the corrosion resistance and to also reduce the electrical resistance and degradation over time in order to receive a better overall efficiency. That is necessary mainly because the individual layers of the pack which are individually manufactured and then bonded together by means of, e.g., welding or brazing or are not in an intimate contact over the whole area. Gaps that are formed at these interfaces lead to high voltages and high corrosion and reduce the connectivity at this area.

Iridium and platinum are commonly used materials for the coating of electrode components due to their unique properties and suitability for the demanding operating conditions of electrolysis and galvanic processes. They offer corrosion resistance, catalytic activity, electrical conductivity and stability at high temperatures.

Iridium and platinum are known for their exceptional durability and resistance to degradation over time. This longevity is important in electrolysis and galvanic processes applications where the electrode pack is subjected to continuous operation and extended service life. But platinum and iridium are very rare and expensive metals. The coating process is laborious and expensive.

The traditional manufacturing routes for electrode packs show major challenges.

An electrode pack needs to transport liquid and gas, have a good mechanical stability, must be electrically conductive and needs to be inert to operating conditions and perform over long time.

The electrode pack can comprise several metal meshes and a porous permeable metal sheets stacked in said pack. The different metal layers need to be intimately connected. The preferred metal for this application is titanium.

Traditionally, the individual ready-made layers are loosely stacked or connected by screwing or spot welding. Such manufacturing technologies cannot ensure a proper connection in between the titanium meshes, sheets, foils and plates through the whole active area. To ensure material transport through all the layers of the pack, however, this can only be done partially. Whilst welded areas of the pack show high electric conductivities, non-welded areas show a risk of inconsistent contact points between the layers. Loose contact surfaces increase interface resistances and increase the risk of material degradation due to high current peaks.

Further problems that are related to poor interface connection and traditional joining methods are:
- Poor flatness of pressed plates;
- No continuous connections lead to reduced lifetime and corrosion;
- Stress corrosion cracking;
- High mechanical stresses;
- High electric currents due to high electric resistance;
- Hydrogen embrittlement;
- Titanium oxide layer leads to poor conductivity;
- Distortion of welded packs leads to assembly problems;
- Complex, expensive, vulnerable furnace technology must be used when applying traditional diffusion bonding presses;
- High failure rates;
- Inhomogeneous mass transport (water, gases) and electrical conductivity;
- Large amounts of precious metals needed.

Diffusion bonding is a process which is already used to create material connections. At present, diffusion bonding techniques widely used in various industries typically involve surface roughening, chemical etching, and the use of intermediate layers or coatings to facilitate bonding. The diffusion bonding is dependent of heat and pressure.

The common approaches for applying heat and pressure are:
Furnace Heating with Mechanical Press: In this method, the bonding assembly is placed in a furnace or heating chamber where it is heated to the desired temperature. Simultaneously, a mechanical press, such as a hydraulic or pneumatic press, applies the required pressure to the assembly. The combination of heat and pressure promotes atomic diffusion and facilitates the formation of metallurgical bonds.
Induction Heating with Mechanical Press: Induction heating involves using an alternating magnetic field to generate heat within the bonding assembly. An induction coil is positioned around the assembly, and an alternating current is passed through the coil, inducing eddy currents within the materials. The resistance to the eddy currents generates heat, heating the assembly to the desired temperature. Meanwhile, a mechanical press applies pressure to promote bonding.
Resistance Heating with Mechanical Press: Resistance heating utilizes the electrical resistance generated between the bonding surfaces to generate heat. An electrical current is passed through the bonding assembly, and the resistance at the interface produces heat. The assembly is simultaneously subjected to pressure from a mechanical press, promoting atomic diffusion and bonding. This kind of processing requires, if several packs are to be treated in one process, separation layers that are to be positioned between the packs to be electrically conductive and hence strictly limits the choice of material for such separation layers.
Hot Isostatic Pressing (HIP): In HIP, heat and pressure are simultaneously applied in a specialized high-pressure vessel. The bonding assembly is placed inside the vessel, and pressure is applied uniformly in all directions by using pressurized gas or liquid. The vessel is heated to the desired temperature, ensuring high-pressure and high-temperature conditions for efficient diffusion bonding.
Diffusion Bonding in Vacuum: In vacuum diffusion bonding, the bonding assembly is placed within a vacuum chamber. The chamber is evacuated to remove any air or gases, creating a low-pressure or near-vacuum environment. Heat is then applied to the assembly, either by external heating elements or by leading electrical current through the materials. Simultaneously, pressure is applied using mechanical presses or by the external atmospheric pressure. The low-pressure environment enhances atomic diffusion and bonding.

While these approaches have shown success, they may suffer from limitations such as inconsistent bonding quality, suboptimal control of process parameters, limited suitability for specific material combinations, limited capability for serial production and high costs.

The pressing furnaces usually used are technically very complex, very costly and limited in size and heat treatment as well as atmosphere control.

Another main problem is the poor flatness of the packs after bonding. Each bonding mechanism results in stresses due to gradients in temperature and slight differences in thermal expansion coefficients of the bonding members. The packs need to be flat in order to assemble them and to avoid cracks when bending them down flat in the assembly.

In EP 280112 A1 a bonding process for composites by the use of a jig and different thermal coefficients is disclosed. This publication, however, does not refer to the manufacture of titanium electrode packs being comprised of different individual layers. EP 280112 A1 describes a way to bond all members that are placed inside a jig. The preferred material for the jig described in EP 280112 A1 is metal. However, most metals will not withstand the higher temperatures and high load at temperatures above 700°C and thus are not capable of being used in bonding titanium layers to form electrode packs. EP 280112 A1 is mainly silent about bonding temperatures, but shows no more than 700°C, see Fig 8 of said publication. That way it would be impossible to bond and connect titanium packs intimately.

In US 8,256,661 B2 a manufacturing method for the production of components via diffusion bonding is described with the example of such component being disclosed as a jet engine fan blade. It is described there, that a component to be bonded is laid in between a die and heated up. Fastening members limit the thermal expansion of the dies and apply pressure. For such a procedure, only limited numbers of bonding members can be bonded. The pressure to bond the components is generated by the dies. The die materials are being described to be steel alloys which are limited in terms of maintaining high forces which would repeatedly be required to be applied when bonding electrode packs with numerous individual layers being stacked. Further, the dies would not be capable of bonding several packs in one setup. The process described in US 8,256,661 B2 is not capable to apply pressure during cooling down of the assembly.

In one example, US 8,256,661 B2 refers to boron nitride spray as a release agent. A loose powder coating like a spray will lead to contamination of the top and bottom layers. Such contamination, however, would adversely interfere with the performance properties of electrode packs by in particular reducing the electric conductivity and increasing the voltage needed to operate an electrolyser or fuel cell that features such electrode packs.

One problem that is intended to be addressed by the present invention is to significantly reduce the amount of interface coating materials by achieving an intimate contact of the material layers at the interfaces.

Another problem with current manufacturing methods is the distortion of the plates after bonding of the individual layers due to differences in thermal expansion of these individual layers and temperature gradients after welding or brazing. The packs need to be flat in order to assemble them and to avoid creating tensions in use. This invention seeks to provide a way to reduce the distortion, integrated in the bonding process while maintaining the intimate bond between the layers.

The above objects are met by a method disclosed herein and characterized in claim 1. Advantageous embodiments of such a method are provided by the features are stated in the dependent claims.

According to this invention, a method for producing layered composite material packs for use as an electrode involves a material bonding process and comprises the following steps:
- stacking multiple material layers to be bonded on top of each other to form a pack,
- assembling several so formed packs on top of each other to form a stack, wherein inert interface plates are placed between adjacent packs in the stack, such that each pack in the stack is separated by an inert interface plate,
- placing inert interface plates on the top and the bottom of the stack,
- placing the stack in between a top and a bottom plate and connecting the top and bottom plates with constraining fixtures for forming a rack, whereas the material of the constraining fixtures is so chosen that a thermal expansion coefficient of the constraining fixtures is smaller than a value of thermal expansion for the total of the stack,
- pressing towards each other the top plate and the bottom plate to apply an initial pressing force for bringing all adjacent material layers of each pack into firm contact with each other,
- placing the rack into a furnace,
- heating up the furnace to a bonding temperature with a heating rate between 0.1 K/min and 35 K/min for applying heat to the rack and for applying a connecting pressure induced by the difference in thermal expansion coefficients of the stack material and the constraining fixtures,
- holding the bonding temperature for a predetermined holding time to form a bond via material diffusion in between adjacent material layers in the packs,
- cooling down the furnace to a temperature of below 350°C,
- disassembling the stack from the rack and interface plates and removing the bonded packs.

According to this invention, several electrode packs are hence created simultaneously by material bonding of two or more components by applying pressure and heat. The bonding partners are placed on top of each other in a form-fitting manner. Several layers of the bonding partners are forming a pack. Typically, the packs may include a bottom layer, one or more mass transport layers (MTL) and a porous transport layer (PTL). The layers of the pack can be made of dense, porous and/or permeable components to enable the pack for electric current, liquid and gas transport. Several packs are placed on top of each other, each separated by an inert interface plate, so forming the stack. The stack is then encased by the rack material with a lower coefficient of thermal expansion than the stack. The stack now contains several layers of the bonding partners forming each pack, an inert interface layer placed in between each of the adjacent packs to prevent bonding of adjacent packs. The surrounding rack is built with top and bottom plates that are connected via the constraining fixtures. The rack including the stack is heated up as a unit. The bonding partners have a higher coefficient of thermal expansion than the constraining fixtures and tend to expand due to their physical properties. The expansion in the direction of the constraining fixtures is physically limited or even prevented by the rack design. As a result, a pressure is generated at the joining zone in between adjacent layers, which pressure connects the individual components tightly and accelerates the diffusion processes in the joining zone.

This reliably leads to joining the parts in a high bond area below the melting temperature. The surface of the bonding members shows very low amounts of contaminants after the bonding process since their interfaces are tightly connected to the adjacent interface plate. While cooling down after the bonding process the rack design may in particular still provide a pressure via a load to avoid distortion due to thermal gradients and differences of the thermal expansion of the different bonded layers.

One main application of the method according to the invention includes, but is not limited to, the joining of porous, permeable, structured or dense titanium foils as electrode packs for use in electrolyser applications for the production of hydrogen or for use in hydrogen fuel cells.

According to the invention, material layers, that are combined in a pack and that are to be bonded, are made of titanium or of titanium alloys.

If the pack contains one or more metal layers, according to one embodiment of the invention, at least one of the material layers may be a layer that is made by powder metallurgy. This allows for an easy and comparably cheap production of the layer with the ability to greatly influence, even control, the material properties of the material layer so produced.

According to the invention the material layers have planar and flat surfaces. In this context, "planar and flat" shall mean that the surfaces of the layers, which will be interfaces in the pack that is built according to the method of the invention, do not show significant dents or raises at local positions which would prevent the pressing forces that are created by the method of the invention to act in a homogenous and uniform manner onto the interfaces of the layers to be connected.

According to a preferred embodiment of the invention, at least material layers of different material density, in particular of dense and porous or permeable material, may be combined in at least one of the packs. This allows to form bonded packs with specific material properties that may well serve as electrodes for use in electrolysers or fuel cells.

For similar reasons one may prefer, according to another embodiment of the invention, to combine material layers of different types of material, in particular layers of titanium or of titanium alloys and of ceramic material, in at least one of the packs.

Also, for similar reasons, one may prefer to use for at least one of the material layers a layer that is made of different types of material, in particular in a composition that varies along at least one planar direction of the layer, in at least one of the packs.

According to yet another embodiment of the invention, the material layers may have a planar size of 1 mm² to 5 m², in particular 5 cm² to 20,000 cm², preferably 100 cm² to 2,000 cm².

According to the invention, the number of packs combined in one rack may be more than 5, in particular more than 50, preferably more than 100. This number, yet may in particular be less than or equal to 1,500.

Further, according to the invention, the number of layers stacked in one pack may be from 2 to 50, in particular from 5 to 8. With such number of layers, functional sheet electrodes may be formed.

When performing the method according to the invention, two or more, in particular 50 to 150, racks may be placed in the furnace, in particular in a stacked column and row assembly. Such manner of placing multiple racks simultaneously in the furnace allows for a cost-efficient production of layered composite material packs with high throughput numbers. The production method according to this invention thus can produce large numbers of packs in one heat treatment run at the same time due to a unique stacking method and use of slim rack design. Several racks can be stapled to fit in one large heat treatment furnace at the same time. That will reduce the cost of the individual electrode packs and therefore the overall cost of the devices equipped therewith, such as electrolysers or fuel cells. Such may help to reduce of the costs of green hydrogen and may hence play an important role in the transformation away from fossil fuels.

According to a possible embodiment of the invention, the con-straining fixture may have threads and the initial pressing force may be applied by means of connecting nuts that are screwed onto the threads to press the top plate and the bottom plate towards each other. This is a very simple, yet effective way to apply the initial pressing force to the packs and stacks that are arranged in the rack.

According to an embodiment of the invention, the constraining fixture may be made of a material that has a thermal expansion coefficient CTE,
with -5xK⁻¹x10⁻⁶ ≤ CTE ≤ 9xK⁻¹x10⁻⁶.

According to an embodiment of the invention, the constraining fixture may be made of a material that has a tensile strength between 5 to 1,500 MPa.

According to an embodiment of the invention, the constraining fixture may be made of a material that has a Youngs modulus lower than the total Youngs modulus of the stack.

According to an embodiment of the invention, the constraining fixture may be made one of one of the following materials: tungsten, molybdenum, carbon fiber reinforced carbon (CFC), mullite, cordierite, silicon oxide, silicon carbide or any combination of the aforesaid materials. One particularly preferred material for the constraining fixture of the present invention is carbon fiber reinforced carbon (CFC) which features a very low thermal expansion coefficient.

According to an embodiment of the invention, the interface plates may be made either of ceramic or of metal, in particular molybdenum, tungsten, titanium, steel or alloys hereof. The interface plates, when they are made of metal, may preferably be coated with ceramic, preferably zirconia, alumina, yttria, titanium oxide, silicon carbide, silicon oxide, mullite or cordierite. The coating may then preferably be applied by thermal spraying, in particular by cold spraying. So, for an interface layer made of a metal body with an inert ceramic material, such as zirconia or yttria, being coated onto the metal corpus, the layer needs to be tightly connected to the metal plate, this being crucial to get a clean surface of the bonding members.

According to an embodiment of the invention, the top and bottom plates may be made of a material with a hot bending strength of more than 25 MPa at 850°C, preferably of molybdenum, tungsten, carbon fiber reinforced carbon (CFC or C/C-Composites), mullite or cordierite.

According to an embodiment of the invention, the bonding temperature may range from 600 °C to 1,300 °C, preferably from 800 °C to 980 °C. The holding time may be chosen to range from 15 min to 16 hours, preferably from 1.5 hours to 5 hours. The bonding temperatures of 600 °C to 1,300 °C are to be considered comparably high. Special materials, such as CFC, are required for the constraining fixture in order to withstand the forces at elevated temperatures. The inert interface layers need to withstand the high temperatures and forces as well.

In an embodiment of the invention, during the heating, bonding and cooling phases, the furnace atmosphere may be kept at vacuum or at an inert gas atmosphere and a pressure from 1*10-8 mbar to 10.000 mbar. An oxygen content in the furnace at bonding temperature may preferably be held at below 250 ppm.

With the method of the present invention, the resulting connecting pressure may preferably be between 0.01 MPa to 10 MPa.

In the course of cooling of the stack a pressure may be maintained on the stack. This may in particular be effected by use of at least one of a flexible top plate in the rack, springs or a weight that presses down the stack. In a preferred embodiment, the pressure to be maintained during cooling of the stack, when generated by weight or when created by springs, which may preferably be tension springs, flat springs, leaf springs or disc springs, may range from 0.001 MPa to 1 MPa. To prevent distortion when the stack is cooling down, this invention provides a way to reduce the amount of distortion by possibly applying pressure in the cooling phase.

When performing the method according to the invention a buffer material may be placed in between the stack and the top plate to prevent the rack from cracking. Such buffer material may be chosen to be of titanium or a titanium alloy and may particularly have a lower cross section than the stack.

The present Invention, thus, describes a method of serial manufacturing of e.g. electrode packs via a novel method of joining two or more material components by creating a material bond by means of applying heat and restricting the degrees of freedom of thermal expansion of the bonded components at the same time.

This invention provides a method which allows to leave out or at least reduce any coating of layer surfaces with precious metal which was required for methods that have been known from the prior art. This reduction or even complete leaving out of coating with precious metal is achieved as the homogenous material connections that may be achieved when bonding the layers by means of the here disclosed method eliminate the interfaces between bonded layers. While iridium and platinum that are commonly used for coating in prior art methods offer good performance characteristics, they are very costly due to their rarity and high market value. The novel material bonding process according to this invention reduces the reliance on precious metals like iridium and platinum while maintaining or enhancing performance levels. It creates intimate interface contacts with a high mechanical strength and a material bond over the whole working area.

This invention introduces a novel serial and efficient production method utilizing a material bonding technology that addresses key challenges and limitations associated with existing techniques. It offers enhanced control over bond quality, improved bond strength, higher bond area, better electrical conductivity between the bonded components, increased efficiency, less use of precious metals, higher cleanliness, less distortion of the pack, lower manufacturing costs and a high-volume production output.

Overall, the present invention represents a significant advancement over the existing state of the art by addressing the limitations that are referred to above and by creating a much more efficient product and serial production method by providing a novel process with a unique choice of materials and a more robust and efficient material bonding solution.

Further advantages and benefits as well as specific features of the present invention will become apparent from the following disclosure of specific embodiments and from the attached drawings that are referred to. In the drawings:
- Fig. 1: a schematic representation of a pack containing several layers confined between two interface plates;
- Fig. 2: another view of the arrangement according to Fig. 1;
- Fig. 3: a schematic illustration of the formation of a stack by stacking numerous packs on top of one another;
- Fig. 4: a sectional view of a rack containing a stack which has been formed as illustrated in Fig. 3;
- Fig. 5: an enlarged detail of a rack according to Fig. 4;
- Fig. 6: another embodiment of a rack comprising a spring element;
- Fig. 7: in representations a to d an illustration of major steps of the method according to the invention;
- Fig. 8: a rack with differently embodied spring elements;
- Fig. 9: a rack with fixtures installed atop of the top plate;
- Fig. 10: in representations a and b two further embodiments of a rack comprising differently construed spring elements;
- Fig. 11: in four representations a to d alternative embodiments for spring elements included in a rack;
- Fig. 12: in two representations a and b further alternative embodiments for spring elements included in a rack;
- Fig. 13: in two states another embodiment another was to include a spring element in the rack;
- Fig. 14: another possible way to include spring elements in a rack;
- Fig. 15: in three representations a to c alternative embodiments for a rack with a clamp as constraining fixture and with different means to apply pressing force and eventually spring elements;
- Fig. 16: an embodiment of top and bottom plates as well as constraining fixtures to form a rack with round shaped packs of round shaped layers;
- Fig. 17: is a cross-sectional microscopic image of a boundary of a porous (upper in the figure) and dense (lower in the figure) layer of titanium in a pack that has been bonded according to the invention; and
- Fig. 18: is a cross-sectional microscopic image of a boundary of a ceramic (right in the figure) and dense titanium (left in the figure) layer in a pack that has been bonded according to the invention.

In the following detailed description, various exemplary embodiments of the invention are disclosed. It should be understood that these embodiments are provided for illustrative purposes only and are not intended to limit the scope of the invention. The invention is capable of numerous variations and modifications, and the disclosed embodiments should not be interpreted as exclusive or exhaustive examples. The scope of the invention is defined by the appended claims and their equivalents, rather than by the examples given. Additionally, while specific features, configurations, and arrangements may be discussed, it should be noted that such discussions are non-limiting and do not preclude the invention from encompassing other variations, modifications, or improvements that fall within the scope of the appended claims.

This invention provides a way to manufacture, in a serial production method, highly efficient and cost competitive layered composite material packs for use as electrode packs.

The layered material composites forming a pack are intimately bonded via a novel production method. A pack is formed by different layers of sheets, plates, expanded metals, shims or foils. Each layer can be dense, permeable or porous and can be made with any suitable manufacturing process like forging, rolling, sintering, additive manufacturing, tape casting or other methods.

Typically, but not limited to, a pack may consist of a baseplate, a shim, several expanded metal sheets or semi dense and permeable foils and a microporous gas permeable titanium layer.

For a proper connection of the layers at each interface to be achieved in a heat treatment run while applying pressure, initial trials have been performed to determine the critical process parameters. Packs have been assembled out of different titanium layers. Interface plates were placed on the bottom and top of the pack. The stack was loaded with different weight load. Several heat treatment runs were performed under argon gas atmosphere and under vacuum. Temperature and holding time were varied. It was found that two low values of pressure and temperature lead to a poor bonding strength and bonding quality. When pressure and temperature were chosen too high, the thickness of the packs was found to be too thin and the pores of the permeable sheets were found to be pressed close or further sintered together.

In the following Table 1, parameters and results of some initial trials are shown

**Table 1: Initial Trials to Determine Process Details and Bond Quality**

| **Trial Nr** | **bonding area/cm2** | **weight/** kg | **weight/ kg/cm2** | **Force/MPa** | **Atmosphere** | **Temperature / °C** | **holding time/ min** | **Interface** | **pull strenght** | **homogenius bonding** |
|---|---|---|---|---|---|---|---|---|---|---|
| 1 | 1250,00 | 200 | 0,16 | 0,016 | HV | 850 | 120 | Graphite | medium | medium |
| 2 | 400,00 | 100 | 0,25 | 0,025 | HV | 850 | 120 | Graphite | medium | medium |
| 3 | 400,00 | 75 | 0,19 | 0,018 | Ar | 850 | 120 | Graphite | medium | poor |
| 4 | 400,00 | 75 | 0,19 | 0,018 | Ar | 850 | 120 | Yttria | medium | medium |
| 5 | 400,00 | 120 | 0,30 | 0,029 | HV | 850 | 120 | Yttria | good | good |
| 6 | 400,00 | 120 | 0,30 | 0,029 | HV | 850 | 120 | Moly-Yttria- Graphite | good | good |
| 7 | 400,00 | 10 | 0,03 | 0,002 | HV | 850 | 120 | Yttria | poor | poor |
| 11 | 400,00 | 120 | 0,30 | 0,029 | HV | 850 | 120 | Moly, Yttria | medium | medium |
| 12 | 400,00 | 120 | 0,30 | 0,029 | HV | 850 | 120 | Pins | poor | very poor |
| 13 | 400,00 | 120 | 0,30 | 0,029 | HV | 900 | 120 | Mo-Yttria | good | good |
| 14 | 1250,00 | 200 | 0,16 | 0,016 | HV | 900 | 120 | Mo-Yttria | good | good |
| 15 | 1250,00 | 200 | 0,16 | 0,016 | HV | 900 | 180 | Mo-Yttria | good | good |

While it is generally possible to connect the layers of a stack by way of weight load in a heat treatment, such a process is susceptible to process fluctuations. It is complex and not suitable for the serial production of electrode packs.

After having narrowed down the process details by use of the trials, a rack was designed for a serial production process as follows:
All individual layers 1 were stapled one on top of the other to form a pack 3. Each pack 3 formed one unit, which may typically be used as an anode, which will be assembled to create an electrolyzer or fuel cell afterwards.

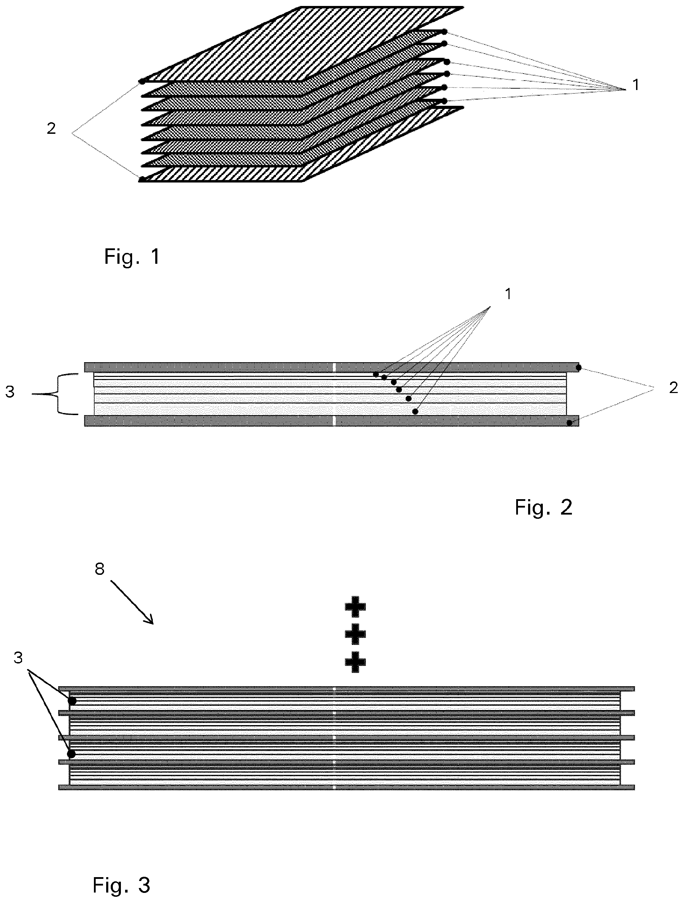

In between each pack 3, an inert interface plate or layer 2 was placed, as shown in Figs. 1 and 2.

The interface plate 2 may typically contain, at its surfaces, an inert ceramic material which needs to withstand the high mechanical forces that apply during the bonding process and which shall not create a material bond at the same time. The interface plate's 2 surface prevents atomic diffusion between the bonding material and the plate. For economic reasons, an interface plate 2 should last for a long time, i.e., shall be re-usable in many cycles. Most common ceramic plates are likely to crack due to their poor mechanical resistivity and poor thermal shock resistance. Hence, interface plates 2 made from metal and coated with an inert material are preferred to be used. A preferred, but not limiting, way to apply the inert coating onto a base plate of, e.g., metal is thermal spraying, more preferable cold spraying.

The base metal sheet of the interface plate 2 may be coated with alumina, zirconia, yttria or any other suitable inert material, that creates a thin inert ceramic layer and maintains the good mechanical strength of the base metal plate. A preferred material for the base plate is molybdenum. But, also other materials like steel alloys, tungsten or titanium and alloys hereof may be a suitable chose as base interface material.

Another way to separate each pack 3 from bonding to each other is the use of ceramic plates, ceramic powder or metal-ceramic matrix materials ("cermets").

After assembling the individual layers 1 to form a pack 3, several packs 3 are placed on top of each other with an inert interface plate 2 arranged in between each of the packs 3, so forming a stack 8, Fig. 3.

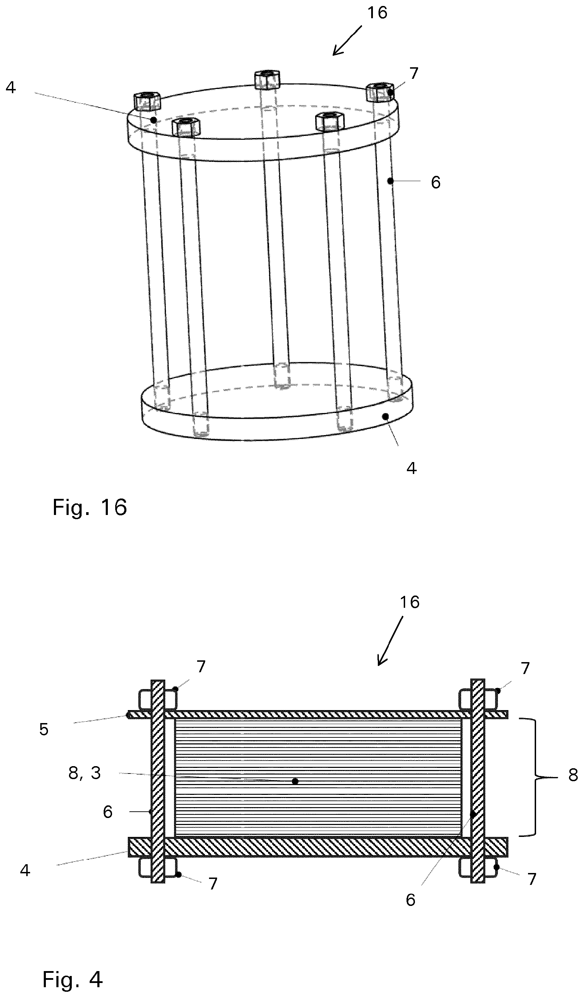

After stacking all packs 3 separated by the interface plates, the assembly is arranged between two plates, a bottom plate 4 and a top plate 5. The plates 4, 5 are connected by constraining fixtures 6 which may be rods that are fixed to the top and bottom plates 4, 5 be means of threads and bolts 7 fixed thereto, Fig. 4. The assembly so gained is a rack 16 which now contains a multitude of packs 3 arranged in the stack 8 and confined by the top and bottom plates 4, 5 and held in place by the constraining fixtures 6. Fig. 4 show one embodiment of a rack 16 with several constraining rods and connecting nuts.

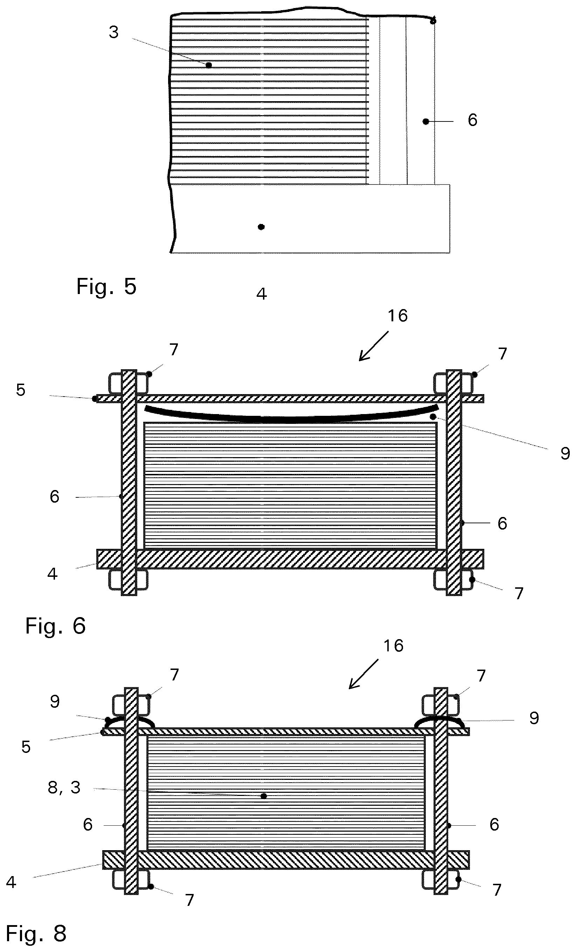

Fig. 5 shows an enlarged part of the rack 16 to further illustrate the arrangement.

The rack 16 generally consists of the bottom plate 4 and the top plate 5 and the constraining fixtures 6 that connected the plates 4, 5 to each other as well as the stack 8 comprising the number of packs 3 arranged between the two plates 4, 5. The type of connection of the bottom and top plates 4, 5 is essential. The constraining fixtures 6 need to have a significant lower thermal expansion coefficient than the pack material. The right material needs to be chosen to fulfill that need. CFC material works, but is not limited to. The constraining fixtures 6 may be provides as rods or plates and can be fixed by nuts 7 or may be clamped or connected in any other way.

In one non-limiting embodiment, the pack 3 may consist of titanium layers 1. Titanium has a CTE, of about 9xK⁻¹x10⁻⁶. The CTE of the constraining fixtures 6 then needs to be lower than 9xK⁻¹x10⁻⁶. The typical CFC material, of which the constraining fixtures may be made, has a Youngs modulus ranging from 10 GPa to 150 GPa, a bulk density of 1 to 3 g/cm³, a tensile strength of 30 to 500 MPa, an interlaminar shear strength of 5 to 50 MPa and a thermal conductivity of 3 to 60 W/mK. As well, it shows very low creep and will therefore last for a long time.

Any suitable material for the constraining fixtures 6 for this bonding application not only need to have a low CTE, but also need to withstand high compression forces at high temperatures of above 500 °C at the same time.

The constraining fixtures 6 are made of a material with a low thermal expansion coefficient, CTE, high temperature resistance, high mechanical strength and low creep at high temperatures of up to 1,300 °C. Said material needs to be very clean and is not allowed to outgas chemicals which could affect the bonding or material quality. According to the invention, a Carbon Reinforced Carbonfiber, CFC, material (also known as CFRC, reinforced carbon-carbon, RCC, carbon fiber carbon composite or C/C Composite) may be a preferred material for this purpose.

There exist some alloyed low CTE steels like Invar (Fe65Ni35) or Kovar^{®} (a metal alloy offered under the trademark by CRS Holdings Inc.), but they cannot be used for this application due to their relative low strength at high temperatures or non-linear CTEs at rising temperature. For example, the CTE of Invar is about 1xK-¹x10⁻⁶ at temperatures up to 400 °C, but then raises to above 12xK⁻¹x10⁻⁶ at temperatures above 600 °C. So, with this material for constraining rods the bonding mechanism would not work.

In Table 2, below, some materials with their CTEs as are relevant for the material to be chosen for the constraining fixtures 6, are listed:

**Table 1: Thermal Expansion Coefficients (CTE) of Different Materials**

| **Material** | **CTE at 20 ° C/ K⁻¹x10⁻⁶** |
|---|---|
| Diamond | 1 |
| CFC, C/C Composite | 1 |
| Mullite | 1,5 |
| Cordierite | 1,5 |
| Silicon Oxide | 2 |
| Silicon Carbide | 4 |
| Tungsten | 4,5 |
| Molybdenum | 5 |
| Yttriumoxide | 7,2 |
| Aluminumoxide | 7,5 |
| Glass | 8,5 |
| Titaniumoxide | 9 |
| Titanium | 9 |
| Yttria stabilized Zirconia, YSZ | 10,5 |
| Zirconiumoxide | 10,5 |
| Carbon Steel | 11 |
| Aluminum | 23 |

Fig. 6 shows an arrangement, where a spring element 9 is arranged between the uppermost pack 3 and the top plate 5. This spring element 9 helps to apply a defined pressure to the stack 8 and the packs 3 contained therein.

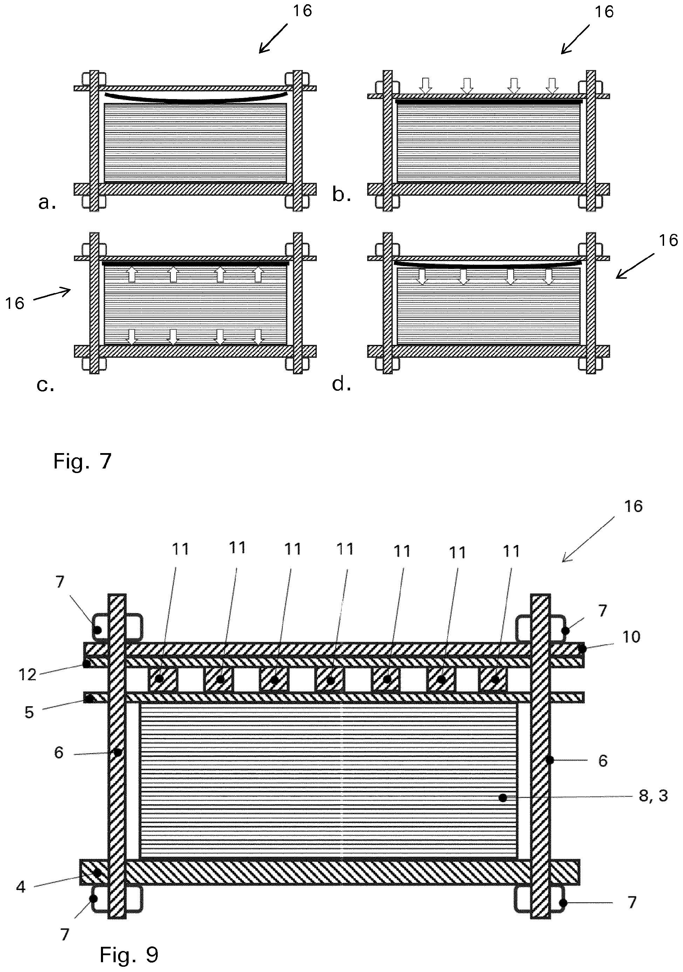

In Fig. 7 the general process of forming the rack 16 and the treatment of the rack 16 is illustrated in the different schemes 7a to d.

After assembly, all Titanium packs now lay in between the top and the bottom plates 4, 5 of the rack 16.

The top plate 5 is pressed down to eliminate all gaps in between the loosely stapled packs 3. This can be done with a press, with the use of threaded rods as constraining fixtures 6 and nuts 7 screwed thereon or with any other suitable methods. Typically, at least a pressure of 100 N/m² is needed to press down the packs 3, depending on the flatness and size of the layers 1 as well as the number of packs 3 to be bonded. After pressing down the whole stack 8, the top and bottom plates 4, 5 will be locked with the constraining fixtures 6. Figs. 7a and 7b show this process with a spring element 9 formed as a spring plate as one embodiment.

The whole rack 16 is then placed into a vacuum or inert gas furnace, suitable for a heat treatment of oxygen sensitive materials. The racks 16 can be stapled so that many racks 16 can fit into one heat treatment furnace.

The rack 16 (or racks) is (are) then heated up to an elevated temperature for diffusion bonding, for titanium-based layers 1 this temperature is chosen to be between 700 °C and 1,300°C. The temperature is held until the whole pack sees essentially the same temperature. The holding time depends on the load of the furnace and may typically be in between 15 minutes and 16 hours.

With rising temperature, the pack 3 material tends to expand more than the con-straining fixtures 6 in between the top and bottom plate 4, 5. The expansion is limited by the constraining fixtures 6 of the rack 16 construction. A force is therefore applied by the bottom and top plates 4, 5 of the rack 16 due to the different thermal expansion coefficients of the packs 3 and the constraining fixtures 6. The applied pressure may typically lie in between 100 g/cm² and 8,000 g/cm² at temperatures of 600 °C to 1,300 °C, and the material of the constraining fixtures 6 are chosen accordingly to exert such pressure due to their difference in CTE to the CTE of the packs 3. This is illustrated in Fig. 7c.

The material diffusion in between the layer 1 materials starts in dependence from the pressure and the temperature. The higher the temperature and the higher the pressure, the faster the diffusion bonding process takes place.

In order to prevent cracking of the rack 16, especially for the constraining fixtures 6, the loads and forces need to be controlled. The stack 8 is allowed to expand in the heat ramp up phase without the constraining fixtures (rods) 6 limiting the expansion significantly. This can be realized materialwise - the Youngs modulus of the material of the constraining fixtures 6 has to be lower than the Youngs modulus of the pack 3 material; in case of titanium about 100 GPa at room temperature.

Another option is to allow a travel due to the use of spring elements 9, that can be pressed down and apply a force which is less than the fore applied due to the mechanical restriction while heating. After passing the critical lower temperatures where the pack 3 material still has a high strength, the pressure will drop at working temperature above 600°C and the constraining fixtures 6 see lower loads.

Another option to prevent the rack 16 from cracking or deformation is the use of buffer material which can hold a defined load and deforms, when the load is too high. That can be, but is not limited to, titanium parts with a defined load area which is smaller than the load carried by the pack 3 material when heated up and smaller than the load, the constraining fixtures can withstand, see Fig. 9.

After the heat treatment the rack 16 is cooled down carefully to prevent applying thermal tensions due to a temperature gradient. A sufficient cooling rate should lay in between 1 K/min and 35 K/min.

To avoid the packs from distortion while cooling down, a pressure can be generated by the rack 16 design. The pressure onto the top plate 5 can be generated through the use of spring elements 9, weight load or the use of constraining fixtures 6 with a lower Youngs modulus than the pack 3 material. In Fig. 7d the use of a spring element 9 for this purpose is illustrated.

If spring elements 9 are used, they will be applied in between the packs 3 and the top and/or bottom plates 4, 5.

To ensure the packs are held and kept flat while cooling, the pressure preferably should lay between 0.001 MPa and 1 MPa.

So, in short, relevant steps of the method according to the invention are: Assembly of the stack 8, press down and align, heat treat and creation of inner force, cooling down and applying force through cooling phase, remove. In this embodiment, the load through the cooling phase may be applied by a spring element 9 in the form of a spring plate.

Fig. 8 shows a different design and placement of spring elements 9. Here, these elements are leaf springs arranged between the nuts 7 and the top plate 5.

Fig. 9 shows an embodiment of a rack 16 with buffer elements 11 made of buffer material and fixtures 10 to connect the top plate 5 with the constraining fixtures 6. The buffer elements help to avoid fracturing of the top and/or bottom plates 4, 5.

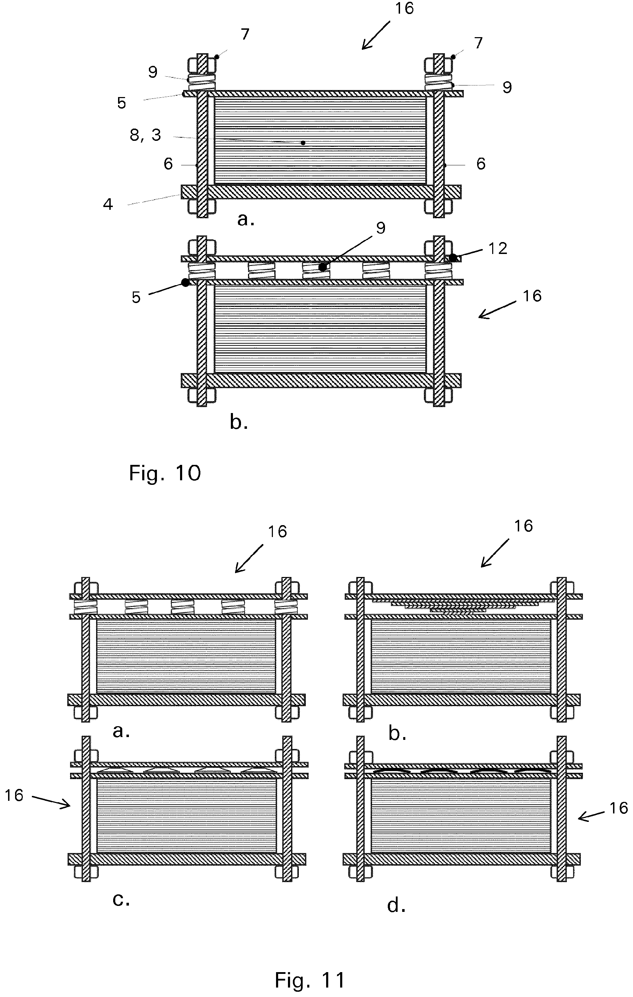

Fig. 10 shows the use of coiled compression springs as spring elements 9. In Fig. 10a these spring elements 9 are arranged between the nuts and 7 the top plate 5 and around the rod-like formed constraining fixtures 6. In Fig. 10b, there is further installed a bearing plate 12 which is placed above the top plate 5 and against which the spring elements 9 rest with such spring elements 9 also being arranged in positions in between the constraining fixtures. The advantage of such an embodiment is to create a very homogenous force onto the hole bonding area design-wise.

Fig. 11 shows in the representations a to d four different possible embodiments of the springs that are placed between the top plate 5 and the bearing plate 12 with coiled springs shown in Fig. 11a, a pack of leaf-spring in Fig. 11b, cup-like formed springs in Fig. 11c and bended leaf springs in Fig. 11d.

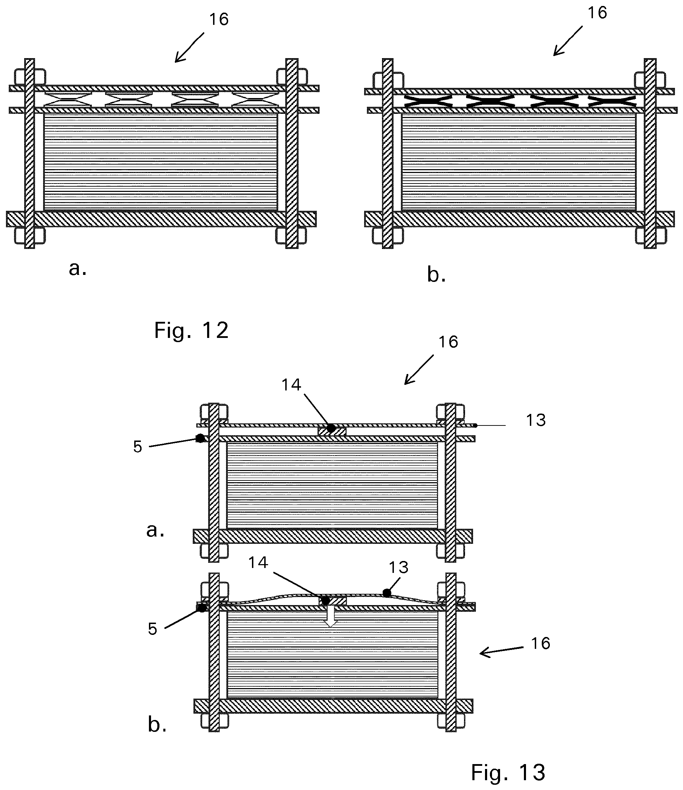

To enhance the load, spring elements can be stacked on top of each other to add up the forces, see Figs. 12 a and b.

In Fig. 13, a rack 16 that comprises a flexible cover plate 13 is shown. This design is an example to show that the loads can be generated not only with classical spring designs, but under the use of the material properties of the rack 16 materials itself. This flexible plate will elastically deform when pressure is exerted to the top plate 5 by the thermal expansion of the racks 16 and will - during cooling - exert a defined pressure on the stack 8 of packs 3. In this figure, also a solid block 14 is seen which is arranged on top of the top plate 5 to cause deformation of the flexible cover plate 13 for exerting tensile force.

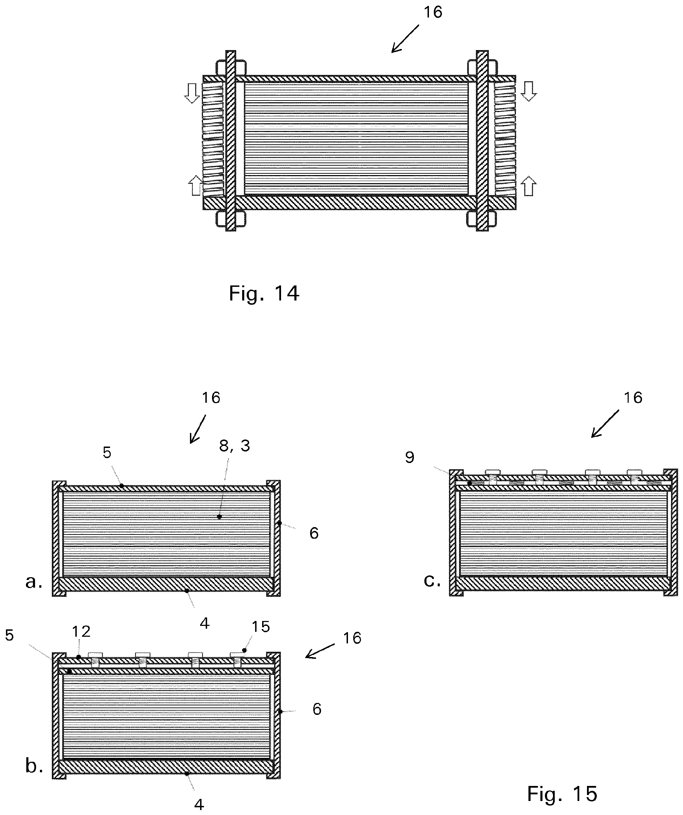

Instead of using compression springs as shown in, e.g., Fig. 11a, tension springs can alternatively be used, e.g., in an arrangement as shown in Fig. 14.

In yet another embodiment constraining clamps may be used instead of rods with connecting nuts as the constraining elements. Such is shown in the representations of Figs. 15 a-c. A pressing force can be applied via set screws 14, Fig. 15b. Compression springs can be applied the same way as in the embodiments with constraining rods, Fig. 15c.

Fig. 16 shows the top and bottom plate and constraining fixtures of a rack 16 embodiment for manufacturing round components.

Any suitable combinations of features described along with the embodiments above here can work and are explicitly not excluded.

After the heat treatment, the packs are intimately bonded together and can be removed from the rack 16.

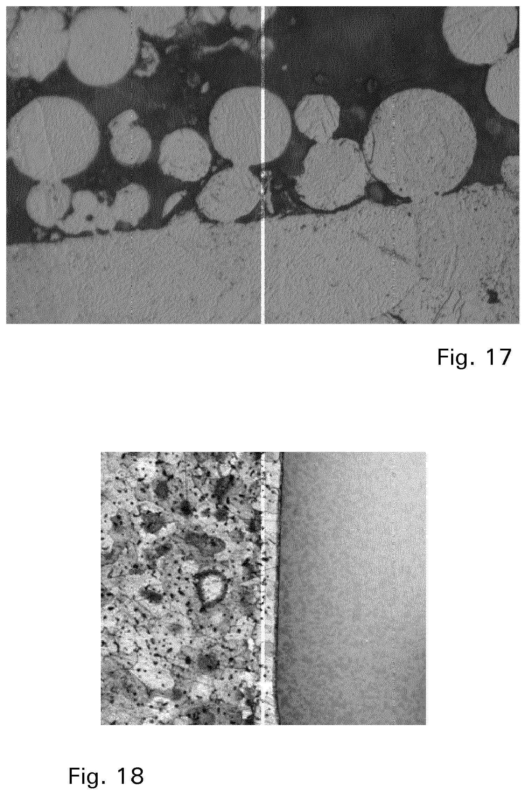

Fig. 17 shows a cross section of bonded porous and dense titanium layers of a pack that has been built according to the method of the invention. The image that was taken by microscope, shows that bond between the material layers is intimate and connects the layers firmly bonded.

Fig. 18 shows a similar cross section of bonded layers of dense titanium and ceramics of a pack that has been built according to the method of the invention.

The image that was taken by microscope, shows that bond between the material layers is intimate and connects the layers firmly bonded.

The use of interface plates ensures that there is no unintended bond and material transition in between the packs and the surrounding rack material as well as between separate packs. So, the bonded packs can be easily removed from the rack and separated.

Although this invention describes the bonding and manufacturing of an electrode pack particularly, the process is capable to bond other materials and components for other types of devices.

### List of Reference Signs

- 1: layer
- 2: interface plate
- 3: pack
- 4: bottom plate
- 5: top plate
- 6: constraining fixture
- 7: nut
- 8: stack
- 9: spring element
- 10: fixture
- 11: buffer element
- 12: bearing plate
- 13: flexible cover plate
- 14: solid block
- 15: set screw
- 16: rack

## Claims

1. A method of production of layered composite material packs for use as an electrode by a material bonding process, comprising:
• stacking multiple material layers (1) to be bonded on top of each other forming a pack (3), wherein material layers (1) to be bonded are made of titanium or of titanium alloys and wherein the material layers (1) to be bonded have planar and flat surfaces,
• assembling several packs (3) on top of each other for forming a stack (8), with placing inert interface plates (2) between adjacent packs (3), such that each pack (3) in the stack (8) being separated by an inert interface plate (2),
• placing inert interface plates (2) on the top and the bottom of the stack (8),
• placing the stack (8) in between a top (5) and a bottom (4) plate and connecting the top (5) and bottom (4) plates with constraining fixtures (6) for forming a rack (16), whereas the material of the constraining fixtures (6) is so chosen that thermal expansion coefficient of the con-straining fixtures (6) is smaller than a value of thermal expansion for the total of the stack (8),
• pressing towards each other the top plate (5) and the bottom plate (4) to apply an initial pressing force for bringing all material layers (1) of each pack (3) into firm contact with each other,
• placing the rack (16) into a furnace,
• heating up the furnace to a bonding temperature for applying heat to the rack (16) with a heating rate between 0.1K/min and 35K/min and applying a connecting pressure due to the difference in thermal expansion coefficients of the stack (8) material and the constraining fixtures (6),
• holding the bonding temperature for a predetermined holding time to form a bond via material diffusion in between the material layers,
• cooling down the furnace to a temperature below 350°C,
• disassembling the stack (8) from the rack (16) and interface plates (2) and removing the bonded packs (3).

2. The method according to any of the preceding claims, wherein in at least one of the packs (3) material layers (1) of different material density, in particular of dense and porous or permeable material, are combined.

3. The method according to any of the preceding claims, wherein in at least one of the packs (3) material layers of different types of material are combined, in particular layers (1) of titanium or titanium alloys and of ceramic material.

4. The method according to any of the preceding claims, wherein in at least one of the packs (3) at least one of the material layers (1) is made of different types of material, in particular in a composition that varies along at least one planar direction of the layer.

5. The method according to any of the preceding claims, wherein in at least one of the packs (3) at least one of the material layers (1) is a layer that is made by powder metallurgy.

6. The method according to any of the preceding claims, wherein the material layers (1) have planar and flat surfaces having a planar size of 1 mm² to 5 m², in particular 5 cm² to 20,000 cm², preferably 100 cm² to 2,000 cm².

7. The method according to any of the preceding claims, wherein the number of packs (3) combined in one rack (16) is more than 5, in particular more than 50, preferably more than 100, and is less than or equal to 1,500.

8. The method according to any of the preceding claims, wherein the number of layers (1) stacked in one pack (3) is from 2 to 50, in particular from 5 to 8.

9. The method according to any of the preceding claims, wherein two or more, in particular 50 to 150, racks (16) are placed in the furnace, in particular in a stacked column and row assembly.

10. The method according to any of the preceding claims, wherein the con-straining fixture (6) has threads and the initial pressing force is applied by means of connecting nuts (7) that are screwed onto the threads to press the top plate (5) and the bottom plate (4) towards each other.

11. The method according to any of the preceding claims, wherein the con-straining fixture (6) is made of a material that has a thermal expansion coefficient CTE, with -5xK⁻¹x10⁻⁶ ≤ CTE ≤ 9xK⁻¹x10⁻⁶.

12. The method according to any of the preceding claims, whereas the con-straining fixture (6) is made of a material that has a tensile strength between 5 to 1,500 MPa and/or that has a Youngs modulus lower than the total Youngs modulus of the stack (8).

13. The method according to any of the preceding claims, wherein the con-straining fixture (6) is made one of one of the following materials: tungsten, molybdenum, carbon fiber reinforced carbon (CFC), mullite, cordierite, silicon oxide, silicon carbide or any combination of the aforesaid materials.

14. The method according to any of the preceding claims, wherein the interface plates (2) are made either of ceramic or of metal, in particular molybdenum, tungsten, titanium, steel or alloys hereof.

15. The method according to claim 14, wherein the interface plates (2), when made of metal, are coated with ceramic, preferably zirconia, alumina, yttria, titanium oxide, silicon carbide, silicon oxide, mullite or cordierite, wherein the coating preferably having been applied by thermal spraying, in particular by cold spraying.

16. The method according to any of the preceding claims, wherein the top (5) and bottom (4) plates are made of a material with a hot bending strength of more than 25 MPa at 850°C, preferably molybdenum, tungsten, carbon fiber reinforced carbon (CFC or C/C-Composites), mullite or cordierite.

17. The method according to any of the preceding claims, wherein the bonding temperature ranges from 600 °C to 1,300 °C, preferably from 800 °C to 980 °C and/or wherein the holding time ranges from 15 min to 16 hours, preferably 1.5 hours to 5 hours.

18. The method according to any of the preceding claims, wherein during the heating, bonding and cooling phases the furnace atmosphere is kept at vacuum or at an inert gas atmosphere and a pressure from 1*10⁻⁸ mbar (1*10⁻¹² MPa) to 10.000 mbar (1 MPa), with an oxygen content in the furnace at bonding temperature being below 250 ppm.

19. The method according to any of the preceding claims, wherein the resulting connecting pressure is between 0.01 MPa to 10 MPa.

20. The method according to any of the preceding claims, wherein during cooling of the stack (8) a pressure is maintained on the stack (8), in particular by use of at least one of a flexible top plate (13) in the rack (16), springs (9) or a weight that presses down the stack (8).

21. The method according to claim 20, wherein the pressure to be maintained during cooling of the stack (8) is generated by weight or is created by springs (9), preferably tension springs, flat springs, leaf springs or disc springs, and wherein the generated pressure ranges from 0.001 MPa to 1 MPa.

22. The method according to any one of the preceding claims, wherein a buffer material (11), in particular a buffer material (11) being titanium and having a lower cross section than the stack (8), is placed in between the stack (8) and the top plate (5) to prevent the rack (16) from cracking.

## Patentansprüche

1. Verfahren zur Herstellung von geschichteten Verbundwerkstoffpackungen zur Verwendung als Elektrode durch ein Materialverbindungsverfahren, umfassend:
• Stapeln mehrerer Materialschichten (1), die unter Ausbildung einer Packung (3) übereinander zu verbinden sind, wobei die zu verbindenden Materialschichten (1) aus Titan oder aus Titanlegierungen hergestellt sind und wobei die zu verbindenden Materialschichten (1) planare und flache Oberflächen aufweisen,
• Zusammenstellen mehrerer Packungen (3) übereinander zum Bilden eines Stapels (8), mit Platzieren inerter Grenzflächenplatten (2) zwischen benachbarten Packungen (3), sodass jede Packung (3) in dem Stapel (8) durch eine inerte Grenzflächenplatte (2) getrennt ist,
• Platzieren inerter Grenzflächenplatten (2) auf der Oberseite und der Unterseite des Stapels (8),
• Platzieren des Stapels (8) zwischen einer oberen (5) und einer unteren (4) Platte und Verbinden der oberen (5) und der unteren (4) Platte mit begrenzenden Befestigungen (6) zum Bilden eines Gestells (16), wobei das Material der begrenzenden Befestigungen (6) so gewählt ist, dass der Wärmeausdehnungskoeffizient der begrenzenden Befestigungen (6) kleiner als ein Wert der Wärmeausdehnung des gesamten Stapels (8) ist,
• Drücken der oberen Platte (5) und der unteren Platte (4) aufeinander zu, um eine Anfangsdruckkraft anzuwenden, um alle Materialschichten (1) jeder Packung (3) in festen Kontakt miteinander zu bringen,
• Platzieren des Gestells (16) in einem Ofen,
• Erwärmen des Ofens auf eine Verbindungstemperatur für das Anwenden von Wärme auf das Gestell (16) mit einer Erwärmungsrate zwischen 0,1 K/min und 35 K/min und Anwenden eines Verbindungsdrucks aufgrund der Differenz in den Wärmeausdehnungskoeffizienten des Materials des Stapels (8) und der begrenzenden Befestigungen (6),
• Halten der Verbindungstemperatur für eine vorbestimmte Haltezeit, um über Materialdiffusion zwischen den Materialschichten eine Verbindung zu bilden,
• Abkühlen des Ofens auf eine Temperatur von unter 350 °C,
• Abbauen des Stapels (8) vom Gestell (16) und den Grenzflächenplatten (2) und Entfernen der verbundenen Packungen (3).

2. Verfahren nach einem der vorhergehenden Ansprüche, wobei in mindestens einer der Packungen (3) Materialschichten (1) von unterschiedlicher Materialdichte, insbesondere aus dichtem und porösem oder durchlässigem Material, kombiniert sind.

3. Verfahren nach einem der vorhergehenden Ansprüche, wobei in mindestens einer der Packungen (3) Materialschichten unterschiedlicher Typen von Material, insbesondere Schichten (1) aus Titan oder Titanlegierungen und aus Keramikmaterial, kombiniert sind.

4. Verfahren nach einem der vorhergehenden Ansprüche, wobei in mindestens einer der Packungen (3) mindestens eine der Materialschichten (1) aus unterschiedlichen Typen von Material hergestellt ist, insbesondere in einer Zusammensetzung, die entlang mindestens einer planaren Richtung der Schicht variiert.

5. Verfahren nach einem der vorhergehenden Ansprüche, wobei in mindestens einer der Packungen (3) mindestens eine der Materialschichten (1) eine Schicht ist, die durch Pulvermetallurgie hergestellt ist.

6. Verfahren nach einem der vorhergehenden Ansprüche, wobei die Materialschichten (1) planare und flache Oberflächen mit einer planaren Größe von 1 mm² bis 5 m², insbesondere 5 cm² bis 20 000 cm², vorzugsweise 100 cm² bis 2 000 cm², aufweisen.

7. Verfahren nach einem der vorhergehenden Ansprüche, wobei die Anzahl der Packungen (3), die in einem Gestell (16) kombiniert sind, größer als 5, insbesondere größer als 50, vorzugsweise größer als 100 und kleiner/gleich 1 500 ist.

8. Verfahren nach einem der vorhergehenden Ansprüche, wobei die Anzahl der in einer Packung (3) gestapelten Schichten (1) zwischen 2 und 50, insbesondere zwischen 5 und 8, beträgt.

9. Verfahren nach einem der vorhergehenden Ansprüche, wobei zwei oder mehr, insbesondere 50 bis 150, Gestelle (16) in dem Ofen platziert sind, insbesondere in einer gestapelten Anordnung von Spalten und Reihen.

10. Verfahren nach einem der vorhergehenden Ansprüche, wobei die begrenzende Befestigung (6) Gewinde aufweist und die Anfangsdruckkraft mittels Verbindungsmuttern (7) angewendet wird, die auf die Gewinde aufgeschraubt werden, um die obere Platte (5) und die untere Platte (4) zueinander zu drücken.

11. Verfahren nach einem der vorhergehenden Ansprüche, wobei die begrenzende Befestigung (6) aus einem Material hergestellt ist, das einen Wärmeausdehnungskoeffizienten CTE aufweist, wobei -5 x K⁻¹ x 10⁻⁶ ≤ CTE ≤ 9 x K⁻¹ x 10⁻⁶.

12. Verfahren nach einem der vorhergehenden Ansprüche, wobei die begrenzende Befestigung (6) aus einem Material hergestellt ist, das eine Zugfestigkeit zwischen 5 und 1 500 MPa aufweist und/oder das einen Elastizitätsmodul aufweist, der niedriger als der Gesamtelastizitätsmodul des Stapels (8) ist.

13. Verfahren nach einem der vorhergehenden Ansprüche, wobei die begrenzende Befestigung (6) aus einem der folgenden Materialien hergestellt ist: Wolfram, Molybdän, kohlenstofffaserverstärkter Kohlenstoff (CFC), Mullit, Cordierit, Siliciumoxid, Siliciumkarbid oder eine jegliche Kombination der vorstehenden Materialien.

14. Verfahren nach einem der vorhergehenden Ansprüche, wobei die Grenzflächenplatten (2) entweder aus Keramik oder aus Metall, insbesondere Molybdän, Wolfram, Titan, Stahl oder Legierungen davon, hergestellt sind.

15. Verfahren nach Anspruch 14, wobei die Grenzflächenplatten (2), wenn sie aus Metall hergestellt sind, mit Keramik, vorzugsweise Zircon, Aluminiumoxid, Yttriumoxid, Titanoxid, Siliciumkarbid, Siliciumoxid, Mullit oder Cordierit, beschichtet sind, wobei die Beschichtung vorzugsweise durch thermisches Spritzen, insbesondere durch Kaltspritzen, aufgetragen wurde.

16. Verfahren nach einem der vorhergehenden Ansprüche, wobei die obere (5) und untere (4) Platte aus einem Material hergestellt sind, das bei 850 °C eine Heißbiegefestigkeit von mehr als 25 MPa aufweist, vorzugsweise aus Molybdän, Wolfram, kohlenstofffaserverstärktem Kohlenstoff (CFC oder C/C-Verbundwerkstoffen), Mullit oder Cordierit.

17. Verfahren nach einem der vorhergehenden Ansprüche, wobei die Verbindungstemperatur von 600 °C bis 1 300 °C, vorzugsweise von 800 °C bis 980 °C, reicht und/oder wobei die Haltezeit von 15 min bis 16 Stunden, vorzugsweise 1,5 Stunden bis 5 Stunden, reicht.

18. Verfahren nach einem der vorhergehenden Ansprüche, wobei die Ofenatmosphäre während der Phasen des Erwärmens, Verbindens und Abkühlens in einem Vakuum oder in einer Inertgasatmosphäre und auf einem Druck von 1 * 10⁻⁸ mbar (1 * 10⁻¹² MPa) bis 10 000 mbar (1 MPa) gehalten wird, wobei ein Sauerstoffgehalt im Ofen bei der Verbindungstemperatur unter 250 ppm beträgt.

19. Verfahren nach einem der vorhergehenden Ansprüche, wobei der resultierende Verbindungsdruck zwischen 0,01 MPa und 10 MPa beträgt.

20. Verfahren nach einem der vorhergehenden Ansprüche, wobei während des Abkühlens des Stapels (8) auf dem Stapel (8) ein Druck aufrechterhalten wird, insbesondere durch Verwendung einer flexiblen oberen Platte (13) in dem Gestell (16), von Federn (9) und/oder einem Gewicht, das den Stapel (8) niederdrückt.

21. Verfahren nach Anspruch 20, wobei der während des Abkühlens des Stapels (8) aufrechtzuerhaltende Druck mittels Gewicht erzeugt oder durch Federn (9), vorzugsweise Spannfedern, Flachfedern, Blattfedern oder Scheibenfedern, hergestellt wird, und wobei der erzeugte Druck von 0,001 MPa bis 1 MPa reicht.

22. Verfahren nach einem der vorhergehenden Ansprüche, wobei ein Puffermaterial (11), insbesondere ein Puffermaterial (11), das Titan ist und einen kleineren Querschnitt als der Stapel (8) aufweist, zwischen dem Stapel (8) und der oberen Platte (5) platziert wird, um Rissbildungen im Gestell (16) zu verhindern.

## Revendications

1. Procédé de fabrication d'ensembles de matériaux composites stratifiés destinés à être utilisés comme électrodes par un processus de liaison de matériaux, comprenant les opérations suivantes:
• empiler plusieurs couches de matériau (1) à lier les unes sur les autres pour former un paquet (3), dans lequel les couches de matériau (1) à lier sont en titane ou en alliages de titane et dans lequel les couches de matériau (1) à lier ont des surfaces planes et lisses,
• assembler plusieurs paquets (3) les uns sur les autres pour former une pile (8), en plaçant des plaques d'interface inertes (2) entre les paquets adjacents (3), de telle sorte que chaque paquet (3) de la pile (8) soit séparé par une plaque d'interface inerte (2),
• disposer des plaques d'interface inertes (2) sur le dessus et le dessous de la pile (8),
• disposer la pile (8) entre une plaque supérieure (5) et une plaque inférieure (4) et connexion des plaques supérieure (5) et inférieure (4) à l'aide de fixations de contrainte (6) pour former un rack (16), le matériau des fixations de contrainte (6) étant choisi de telle sorte que le coefficient de dilatation thermique des fixations de contrainte (6) soit inférieur à la valeur de dilatation thermique de l'ensemble de la pile (8),
• comprimer l'une contre l'autre la plaque supérieure (5) et la plaque inférieure (4) afin d'appliquer une force de pression initiale pour amener toutes les couches de matériau (1) de chaque paquet (3) en contact ferme les unes avec les autres,
• placer le support (16) dans un four,
• chauffer le four à une température de liaison pour appliquer de la chaleur au rack (16) à une vitesse de chauffage comprise entre 0,1 K/min et 35 K/min et appliquer une pression de connexion due à la différence entre les coefficients de dilatation thermique du matériau de la pile (8) et des dispositifs de contrainte (6),
• maintenir la température de liaison pendant une durée prédéterminée pour former une liaison par diffusion du matériau entre les couches de matériau,
• refroidir le four à une température inférieure à 350°C,
• dégager la pile (8) du support (16) et des plaques d'interface (2) et retirer les paquets liés (3).

2. Procédé selon l'une quelconque des revendications précédentes, dans lequel au moins l'un des paquets (3) combine des couches de matériau (1) de densité différente, en particulier de matériau dense et poreux ou perméable.

3. Procédé selon l'une quelconque des revendications précédentes, dans lequel au moins un des paquets (3) combine des couches de matériaux de types différents, en particulier des couches (1) de titane ou d'alliages de titane et de matériau céramique.

4. Procédé selon l'une quelconque des revendications précédentes, dans lequel, dans au moins l'un des paquets (3), au moins l'une des couches de matériau (1) est constituée de différents types de matériaux, en particulier dans une composition qui varie le long d'au moins une direction plane de la couche.

5. Procédé selon l'une quelconque des revendications précédentes, dans lequel, dans au moins l'un des paquets (3), au moins l'une des couches de matériau (1) est une couche fabriquée par métallurgie des poudres.

6. Procédé selon l'une quelconque des revendications précédentes, dans lequel les couches de matériau (1) ont des surfaces planes et plates ayant une taille plane de 1 mm² à 5 m², en particulier de 5 cm² à 20 000 cm², de préférence de 100 cm² à 2 000 cm².

7. Procédé selon l'une quelconque des revendications précédentes, dans lequel le nombre de paquets (3) combinés dans un rack (16) est supérieur à 5, en particulier supérieur à 50, de préférence supérieur à 100, et est inférieur ou égal à 1500.

8. Procédé selon l'une quelconque des revendications précédentes, dans lequel le nombre de couches (1) empilées dans un paquet (3) est compris entre 2 et 50, en particulier entre 5 et 8.

9. Procédé selon l'une quelconque des revendications précédentes, dans lequel deux ou plusieurs, en particulier 50 à 150, supports (16) sont placés dans le four, en particulier dans un ensemble empilé en colonnes et rangées.

10. Procédé selon l'une quelconque des revendications précédentes, dans lequel le dispositif de contrainte (6) comporte des filetages et la force de pression initiale est appliquée au moyen d'écrous de raccordement (7) qui sont vissés sur les filetages pour presser la plaque supérieure (5) et la plaque inférieure (4) l'une vers l'autre.

11. Procédé selon l'une quelconque des revendications précédentes, dans lequel le dispositif de contrainte (6) est fabriqué dans un matériau qui présente un coefficient de dilatation thermique CTE, avec -5xK⁻¹x10⁻⁰ ≤ CTE < 9xK⁻¹x10⁻⁶.

12. Procédé selon l'une quelconque des revendications précédentes, dans lequel le dispositif de contrainte (6) est constitué d'un matériau qui présente une résistance à la traction comprise entre 5 et 1 500 MPa et/ou qui présente un module d'Young inférieur au module d'Young total de la pile (8).

13. Procédé selon l'une quelconque des revendications précédentes, dans lequel le dispositif de contrainte (6) est constitué de l'un des matériaux suivants: tungstène, molybdène, carbone renforcé de fibres de carbone (CFC), mullite, cordiérite, oxyde de silicium, carbure de silicium ou toute combinaison des matériaux susmentionnés.

14. Procédé selon l'une quelconque des revendications précédentes, dans lequel les plaques d'interface (2) sont réalisées en céramique ou en métal, en particulier en molybdène, tungstène, titane, acier ou alliages de ceux-ci.

15. Procédé selon la revendication 14, dans lequel les plaques d'interface (2), lorsqu'elles sont en métal, sont revêtues de céramique, de préférence de zircone, d'alumine, d'yttria, d'oxyde de titane, de carbure de silicium, d'oxyde de silicium, de mullite ou de cordiérite, le revêtement ayant de préférence été appliqué par projection thermique, en particulier par projection à froid.

16. Procédé selon l'une quelconque des revendications précédentes, dans lequel les plaques supérieure (5) et inférieure (4) sont réalisées dans un matériau présentant une résistance à la flexion à chaud supérieure à 25 MPa à 850 °C, de préférence du molybdène, du tungstène, du carbone renforcé de fibres de carbone (CFC ou composites C/C), de la mullite ou de la cordiérite.

17. Procédé selon l'une quelconque des revendications précédentes, dans lequel la température de liaison est comprise entre 600°C et 1 300°C, de préférence entre 800°C et 980°C, et/ou dans lequel le temps de maintien est compris entre 15 minutes et 16 heures, de préférence entre 1,5 heure et 5 heures.

18. Procédé selon l'une quelconque des revendications précédentes, dans lequel, pendant les phases de chauffage, de liaison et de refroidissement, l'atmosphère du four est maintenue sous vide ou sous une atmosphère de gaz inerte et à une pression comprise entre 1*10⁻⁸ mbar (1*10⁻¹² MPa) et 10 000 mbar (1 MPa), la teneur en oxygène dans le four à la température de liaison étant inférieure à 250 ppm.

19. Procédé selon l'une quelconque des revendications précédentes, dans lequel la pression de liaison résultante est comprise entre 0,01 MPa et 10 MPa.

20. Procédé selon l'une quelconque des revendications précédentes, dans lequel, pendant le refroidissement de la pile (8), une pression est maintenue sur la pile (8), en particulier à l'aide d'au moins un élément parmi une plaque supérieure flexible (13) dans le support (16), des ressorts (9) ou un poids qui appuie sur la pile (8).

21. Procédé selon la revendication 20, dans lequel la pression à maintenir pendant le refroidissement de la pile (8) est générée par le poids ou est créée par des ressorts (9), de préférence des ressorts de traction, des ressorts plats, des ressorts à lames ou des ressorts à disques, et dans lequel la pression générée est comprise entre 0,001 MPa et 1 MPa.

22. Procédé selon l'une quelconque des revendications précédentes, dans lequel un matériau tampon (11), en particulier un matériau tampon (11) en titane et ayant une section transversale inférieure à celle de la pile (8), est placé entre la pile (8) et la plaque supérieure (5) afin d'empêcher la fissuration de la crémaillère (16).
